# EUROPÄISCHE PATENTSCHRIFT

(11) **EP 2 214 890 B1**
(45) Veröffentlichungstag und Bekanntmachung des Hinweises auf die Patenterteilung: **07.09.2011**
(21) Anmeldenummer: 08842267.0
(22) Anmeldetag: 06.10.2008
(51) Int. Cl.: B29C 67/00

(54) **VERFAHREN UND VORRICHTUNG ZUM FÖRDERN VON PARTIKELMATERIAL BEIM SCHICHTWEISEN AUFBAU VON MODELLEN**
METHOD AND DEVICE FOR CONVEYING PARTICULATE MATERIAL DURING THE LAYER-WISE PRODUCTION OF PATTERNS
PROCÉDÉ ET DISPOSITIF D'ACHEMINEMENT DE MATIÈRE PARTICULAIRE LORS DE LA CONSTITUTION EN COUCHES DE MODÈLES

(30) Priorität: 21.10.2007 DE 102007050679
(43) Veröffentlichungstag der Anmeldung: 11.08.2010
(73) Patentinhaber: Voxeljet Technology GmbH, 86316 Friedberg (DE)
(72) Erfinder: EDERER, Ingo, 82269 Geltendorf (DE); HARTMANN, Andreas, 86391 Stadtbergen (DE)
(74) Vertreter: Wagner, Sigrid
(86) Internationale Anmeldenummer: PCT/DE2008/001602
(87) Internationale Veröffentlichungsnummer: WO 2009/052773

(56) Entgegenhaltungen:
- US-A1- 2002 090 410
- US-A1- 2006 175 346
- US-A1- 2007 026 145

## Beschreibung

Die Erfindung bezieht sich auf ein Verfahren und eine Vorrichtung zum Fördern von Partikelmaterial beim schichtweisen Aufbau von Modellen.

Verfahren zur Herstellung dreidimensionaler Bauteile sind schon seit längerer Zeit bekannt.

Beispielsweise wird in der europäischen Patentschrift EP 0 431 924 B1 ein Verfahren zur Herstellung dreidimensionaler Objekte aus Computerdaten beschrieben. Dabei wird ein Partikelmaterial in einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann vom Restpulver z.B. durch Abbürsten befreit werden.

In ähnlicher Weise arbeiten auch andere Pulver-gestützte Rapid-Prototyping-Prozesse, wie z.B. das selektive Lasersintern oder das Elektron-Beam-Sintern bei denen jeweils ebenso ein loses Partikelmaterial schichtweise ausgebracht und mit Hilfe einer gesteuerten physikalischen Strahlungsquelle selektiv verfestigt wird.

Im Folgenden werden alle diese Verfahren unter dem Begriff "dreidimensionale Druckverfahren" oder 3D-Druckverfahren zusammengefasst.

Bei aus dem Stand der Technik bekannten 3D-Druckverfahren wird üblicherweise das Partikelmaterial mit Hilfe einer Beschichtereinheit aufgetragen. Diese Beschichtereinheit muss bei niedriegem Füllstand mit Partikelmaterial aus einem Vorratsbehälter beschickt werden.

Hierfür sind aus dem Stand der Technik verschiedene Verfahren und Vorrichtungen bekannt.

So beschreibt die WO 98/28124 A1 ein Verfahren, bei dem das Pulvermaterial über einen Kolben auf einen Arbeitsbereich geschoben wird und von dort über Walzen auf den zu beschichtenden Bereich aufgetragen wird.

Ferner ist aus der WO 00/78485 A2 eine Vorrichtung zum Befüllen eines Beschichters bekannt, bei dem in einer Endposition des Beschichters über diesem ein Vorratsbehälter angeordnet ist, der einen Schiebeverschluss aufweist, wobei dieser Schiebeverschluss bei Bedarf geöffnet werden kann und so die Beschichtereinrichtung befüllt werden kann.

Aus derselben Offenlegungsschrift ist weiterhin eine Vorrichtung bekannt, bei der die Förderung des Partikelmaterials aus dem Vorrat zum Beschichter über ein Förderband erfolgt.

Ferner wird in der WO 2003/97518 beschrieben das Partikelmaterial aus dem Vorratsbehälter über einen Schieber in das Beschichtersystem zu fördern.

Ferner ist aus US 2004/0012112A1 eine Fördereinrichtung bekannt, die ein Bandtransportsystem mit Förderkörben zum Transport von Partikelmaterial zum Beschichter nutzt.

Eine weitere Möglichkeit, um Partikelmaterial aus einem Vorratsbehälter in ein Beschichtersystem zu fördern wird in der DE 10 2005 056 260 A1 beschrieben. Hierbei wird die Beschichtereinheit bei niedriegem Füllstand mit Partikelmaterial aus einem Vorratsbehälter derart befüllt, dass der Füllstand in der Beschichtereinheit über die gesamte Beschichterlänge auch bei vorher unregelmäßigem Füllstand eine vorbestimmtes Niveau erreicht.

Bei diesen aus dem Stand der Technik bekannten Verfahren und Vorrichtungen zum Befüllen einer Beschichtereinheit für Fluide hat es sich als nachteilig erwiesen, dass immer eine Füllstandskontrolle notwenig ist. Zudem kann eine ungleichmäßige Befüllung über die Länge des Beschichters mit den Verfahren des Stand der Technik nur unbefriedigend ausgeglichen werden.

US-A-2007/0026145 zeigt die Merkmale der Oberbegriffe der Ansprüchen 1 und 9.

Es ist daher Aufgabe der vorliegenden Erfindung ein Verfahren und eine Vorrichtung bereitzustellen mit denen es möglich ist auf den Einsatz einer Füllstandskontrolle zu verzichten und den Beschichter über die gesamt Länge gleichmäßig zu befüllen.

Diese Aufgabe wird gelöst durch ein Verfahren zum Fördern von Partikelmaterial beim schichtweisen Aufbau von Modellen wobei Pulver aus einem Vorrat in eine Beschichtereinheit und absichtlich überschüssiges der Beschichtereinheit zugeführtes Pulver wieder zurück in den Vorrat gefördert wird und diese Förderung in einem geschlossenen Förderkreislauf erfolgt.

Bei einem derartigen erfindungsgemäßen Verfahren ist es nun möglich, dass durch die Förderung des Partikelmaterials in einem Förderkreislauf Partikelmaterial aus einem Vorrat zu dem Beschichtersystem befördert und überschüssiges Pulver wieder zurück zum Vorrat befördert wird.

Das Beschichtersystem wird also so lange befüllt, bis es vollständig befüllt ist und überschüssiges Partikelmaterial wird direkt wieder direkt dem Vorrat zugeführt. Das bedeutet, dass die Befüllung über eine bestimmte (sichere) Zeit läuft und man dann sicher sein kann, dass der Beschichter vollständig befüllt ist. Ist der Beschichter voll wird das überschüssige Partikelmaterial einfach wieder zurück zum Vorrat gefördert.

Unter einem geschlossenen Fördersystem ist daher gemäß der vorliegenden Erfindung ein System zu verstehen, bei dem eine Förderung zum Beschichtersystem erfolgt und von dort auch gegebenenfalls zurück in den Vorrat.

Gemäß einer bevorzugten Ausführungsform der vorliegenden Erfindung könnte die Pulverfiörderung über Schnecken erfolgen.

Daneben oder zusätzlich wäre es auch möglich, dass die Pulverförderung über Unterdruck erfolgt.

Eine Förderung über Unterdruck kann vor allem dann vorteilhaft sein, wenn die Förderung in einem gegenüber der Umgebung abgeschlossenen Fördersystem erfolgen soll.

Bei dem erfindungsgemäßen Verfahren kann es ferner günstig sein, wenn die Pulverförderung des Förderkreislaufs über ein einzelnes Fördersystem erfolgt. Es müssen dann die unterschiedlichen Fördersysteme unter Umständen nicht aufeinander abgestimmt werden.

Es ist jedoch auch denkbar, dass bei dem erfindungsgemäßen Verfahren die Pulverförderung des Förderkreislaufs über mehrere Fördersysteme erfolgt.

Die Förderung des Partikelmaterials aus dem Vorrat zum Beschichtersystem und wieder zurück zum Vorrat kann bei einem erfindungsgemäßen Verfahren über alle möglichen denkbaren einzelnen oder mehreren Förderverfahren erfolgen. Beispielsweise könnten dies beispielsweise neben Förderschnecken und Unterdruck, Förderbänder und/oder Förderkörbe sein.

Darüber hinaus kann es gemäß der vorliegenden Erfindung auch vorteilhaft sein, wenn die Pulverförderung aus dem Vorrat zum Beschichtersystem über ein Abwurfsystem erfolgt.

Eine solche Ausgestaltung der vorliegenden Erfindung hat sich besonders deshalb als vorteilhaft erwiesen, da durch den Einsatz der Abwurfvorrichtung im Beschichtersystem eine gleichmäßige Befüllung stattfinden kann.

Bei dem erfindungsgemäßen Verfahren kann es gemäß einer bevorzugten Ausführungsform günstig sein, wenn der Förderkreislauf auch überschüssiges Pulvermaterial nach dem Beschichtungsprozess in den Vorrat zurückfördert. Dieses überschüssige Partikelmaterial aus dem Beschichtungsverfahren könnte gegebenenfalls, bevor es zum Vorrat zurückgefördert wird, noch gereinigt werden. So könnte beispielsweise eine Förderung durch ein Sieb erfolgen.

Ferner wird die Aufgabe der vorliegenden Erfindung durch eine Vorrichtung gemaß Anspruch 9 gelöst.

Gemäß einer bevorzugten Ausführungsform der erfindungsgemäßen Vorrichtung ist ferner ein Abwurfsystem vorgesehen. Ein solches kann dazu geeignet sein im Beschichtersystem eine besonders gleichmäßige Niveauverteilung des Partikelmaterials zu erhalten.

Insbesondere bezüglich der Maschinengeometrie kann vorteilhaft sein, wenn bei der erfindungsgemäßen Vorrichtung der Vorrat zumindest bei einem Befüllvorgang, in vertikaler Richtung, also in Richtung senkrecht zur Beschichtungsrichtung gesehen, unterhalb der Beschichteinheit angeordnet ist.

Ferner kann es für die erfindungsgemäße Vorrichtung günstig sein, wenn das Pulverfördersystem zumindest ein Förderband aufweist.

Daneben wäre es aber auch denkbar, dass Vorrichtung als Pulverfördersystem Förderschnecken und/oder auch einen Sauger zur Unterdruckförderung aufweist.

Weist die erfindungsgemäße Vorrichtung gemäß einer bevorzugten Ausführungsform ein Abwurfsystem auf, so kann es gegebenenfalls günstig sein, wenn das Abwurfsystem zwei Blenden mit Schlitzen aufweist.

Daneben ist es auch denkbar, dass die Vorrichtung derart vorgesehen ist, dass das Abwurfsystem zwei ineinander liegende Rohre mit versetzt angeordneten Bohrungen oder Schlitzen aufweist.

Ist bei einer erfindungsgemäßen Vorrichtung ferner eine Anschlussstelle zum Einbringen neuen Pulvermaterials in den Vorrat vorgesehen, so ist unter Umständen das Nachfüllen von Partikelmaterial in den Vorrat besonders einfach und sauber.

Zur näheren Erläuterung wird die Erfindung anhand bevorzugter Ausführungsbeispiele nachfolgend unter Bezugnahme auf die Zeichnung näher beschrieben.

In der Zeichnung zeigt dabei:
Figur 1 ein übliches Verfahren zum schichtweisen Auftragen von Partikelmaterial;
Figur 2 eine erfindungsgemäße Vorrichtung gemäß einer bevorzugten Ausführungsform;
Figur 3 eine erfindungsgemäße Vorrichtung gemäß einer weiteren bevorzugten Ausführungsform;
Figur 4 eine besonders bevorzugte Ausführungsform eines Fördersystems;
Figur 5 eine weitere bevorzugte Ausführungsform eines Fördersystems;
Figur 6 eine noch weitere bevorzugte Ausführungsform eines Fördersystems;
Figur 7 eine bevorzugte Ausführungsform des Abwurfsystems;
Figur 8 eine weitere bevorzugte Ausführungsform des erfindungsgemäßen Abwurfsystems;
Figur 9 eine noch weitere bevorzugte Ausführungsform des Abwurfsystems;
Figur 10 eine weitere bevorzugte Ausführungsform eines Fördersystems; und
Figur 11 eine Nachfülleinrichtung gemäß einer bevorzugten Ausführungsform der Erfindung.

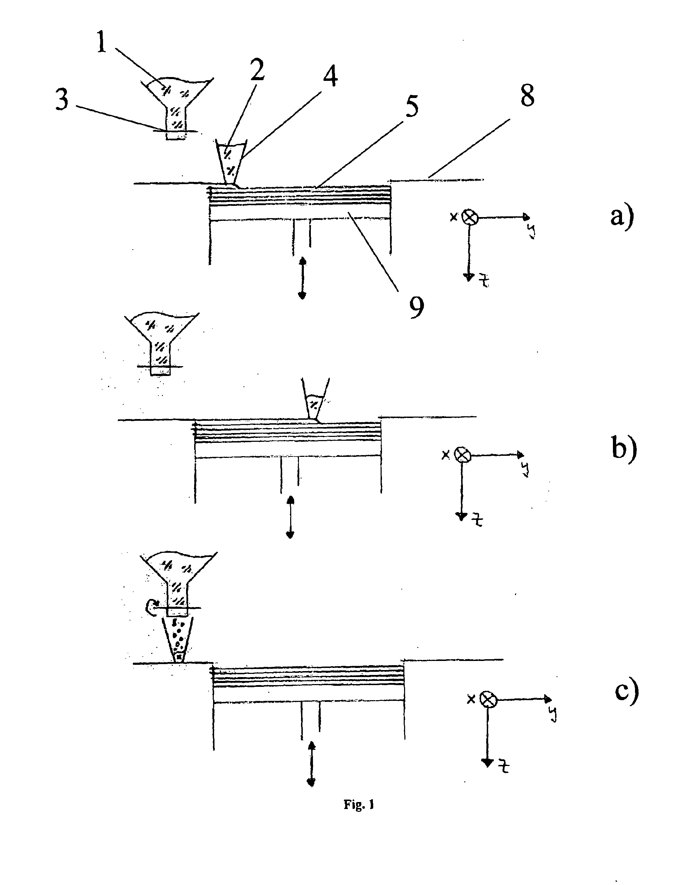

Betrachtet man Figur 1, so ist dort allgemein ein Partikelbeschichtungsprozess beschrieben.

Beispielhaft soll im Folgenden das erfindungsgemäße Verfahren und die erfindungsgemäße Vorrichtung für den Einsatz beim schichtweisen Aufbau von Gussmodellen aus Partikelmaterial, Bindemittel und Härter bei einem Rapid-Prototyping-Verfahren erläutert werden.

Bei einem Aufbauverfahren, das unter Bezugnahme auf Figur 1 beschrieben wird, eines Bauteiles, wie, beispielsweise eines Gussmodelles, wird eine Bauplattform 9, auf die die Gussform aufgebaut werden soll, um eine Schichtstärke des Partikelmaterials 2 abgesenkt. Danach wird Partikelmaterial 2 in einer erwünschten Schichtstärke aus einem Beschichtersystem 4 auf die Bauplattform 9 aufgetragen.

Zwischen dem Aufbau der einzelnen Schichten erfolgt dann beispielsweise das selektive Auftragen von Härter auf auszuhärtende Bereiche.

Am Anfang des Beschichtungsverfahrens wird das Beschichtersystem 4 von einer Ausgangslage über die Werkstückplattform bewegt. Dies ist in Figur 1 a) dargestellt.

Das Beschichtersystem 4 fährt nun in konstanter Fahrt über die Bauplattform 9. Dabei gibt es Partikelmaterial 2 in genau der richtigen Menge ab und erzeugt dünne Schichten 5 des Partikelmaterials 2 auf der Bauplattform 9. Dies ist in Figur 1 b) gezeigt.

Das Beschichtersystem 4 wird anschließend wieder in die Ausgangsposition verfahren und kann über eine Befüllvorrichtung durch Öffnen des Abwurfschiebers 3 aus einem Partikelvorrat 1 neu befüllt werden. Dies ist in Figur 1 c) gezeigt.

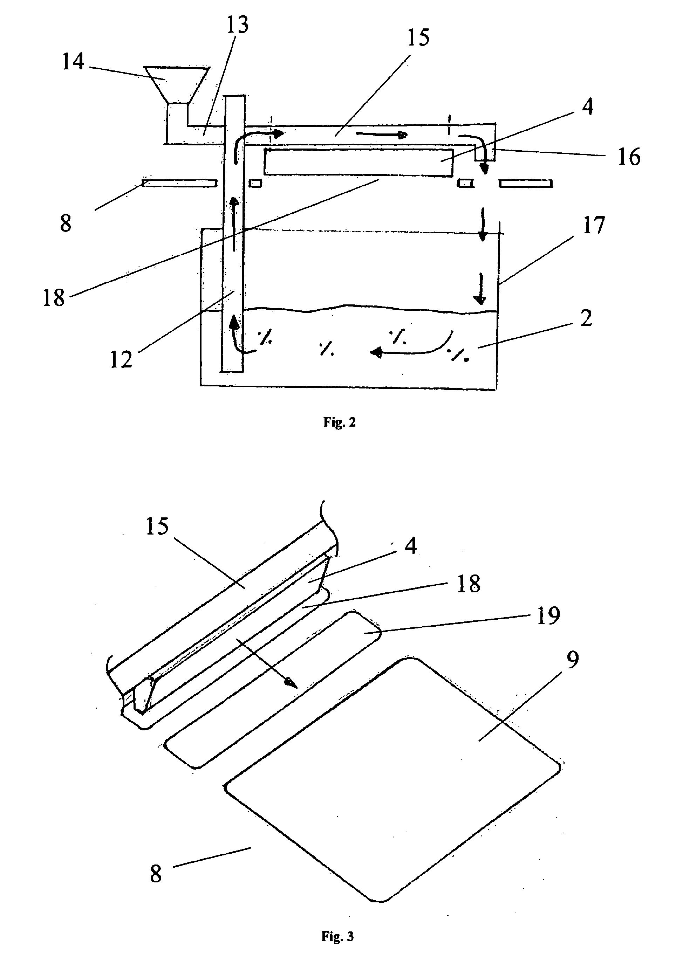

In Figur 2 ist die erfindungsgemäße Befüllung des Beschichtersystems 4 über ein Kreislaufssystem dargestellt.

Wie der Figur zu entnehmen ist, wird hierzu das Partikelmaterial 2 aus einem Vorratsbehälter 17, der sich unter dem Niveau der Bewegungsebene des Beschichters und unter dem Maschinentisch 8 befindet, über ein erstes Fördersystem 12 auf ein Niveau über dem Beschichter 4 befördert. Das bedeutet, dass der Vorrat zumindest bei einem Befüllvorgang, in vertikaler Richtung, also in Richtung senkrecht zur Beschichtungsrichtung gesehen, unterhalb der Beschichteinheit angeordnet ist.

Über einen weiteres Fördersystem 13 (separat oder Teil des ersten Systems) wird das Partikelmaterial gemäß der gezeigten bevorzugten Ausführungsform über ein schaltbares Abwurfsystem 15 realisiert. Über ein Bypasssystem 16 wird überschüssiges Pulver wieder zurück in den Vorrat, beziehungsweise die Vorratskammer 17 geführt.

Bei der gezeigten bevorzugten Ausführungsform der Erfindung sind die Bestandteile der Vorrichtung umfassend Fördereinrichtungen 12, 13, Vorratsbehälter 17, Abwurfsystem 15, Bypass 16 und Beschichter 4 beim Befüllvorgang in einer vertikalen Ebene parallel zum Beschichter angeordnet. Der Vorteil dieser Anordnung liegt darin dass überschüssiges Pulver oder Leckage direkt in den Vorratsbehälter zurückfließen kann.

In Figur 3 ist eine weitere bevorzugte Ausführungsform der Erfindung dargestellt. Wie dieser Figur leicht zu entnehmen ist, sind im Maschinentisch 8 mit der Bauplattform 9 zwei Öffnungen 19, 18 angeordnet. Hierbei dient eine erste Öffnung 18 zur Pulverrückführung im Förderkreislauf, bei dem Partikelmaterial aus dem Vorrat 17 zum Beschichter 4 gefördert wird und eine zweite Öffnung 19, um überschüssiges Partikelmaterial 11 des Beschichtungsvorganges aufzunehmen. Dieses Pulver kann durch den Bauvorgang verschmutzt worden sein. Es kann daher günstig sein, dass sie in einen separaten Behälter abgeleitet wird. Daneben könnte es aber auch sein, dass es direkt einer Reinigung unterzogen wird.

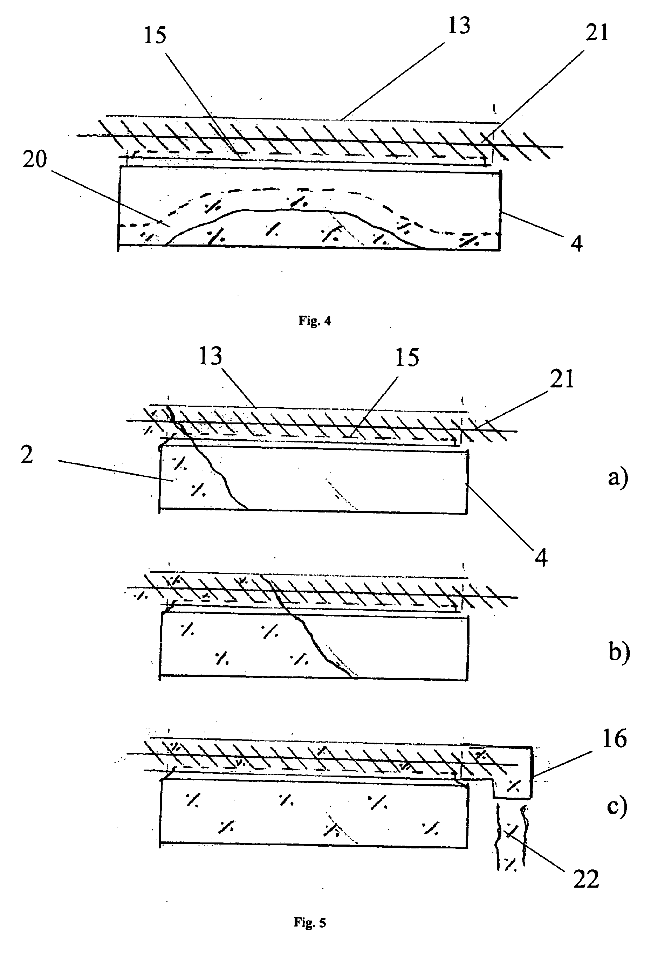

Wie in Figur 4 gezeigt, können die Fördersysteme 12, 13 gemäß einer bevorzugten Ausführungsform durch Schneckenförderer 21 die in Rohren ausgebildet sind, ausgeführt sein. Ebenso können aber auch Förderbänder, Förderbänder mit Transportkörben oder Saugeinrichtungen verwendet werden.

Werden Schneckenförderer verwendet, so kann es vorteilhaft sein, wenn zwei getrennte Systeme 12, 13 vorgesehen sind. Eine erste Förderschnecke übernimmt den Transport des Pulvers auf ein Niveau über dem Beschichter 4. Besonders geeignet sind gebogene oder schräge Systeme die eine günstige Pulveraufnahme aus dem Vorrat 17 ermöglichen. Eine zweite Förderschnecke läuft waagrecht über dem Beschichter 4. Sie übernimmt den Transport zum Beschichter 4 und zum Bypass 16.

Zum Befüllen fährt der Beschichter 4 auf eine Position unter dem Befüllsystem. Der Beschichtervorratsbehälter ist dabei vorzugsweise trichterförmig ausgebildet. Zwischen Beschichter 4 und Abwurfsystem 15 befindet sich, wie in der Figur 3 dargestellt ist, in der Stellung nur ein schmaler Spalt.

Eine Abwurfeinrichtung 15 gemäß der vorliegenden Erfindung kann auf alle denkbaren Arten betrieben werden. Beispielhaft sollen hier zwei verschiedene Systeme unter Bezugnahme auf die Figuren 4, 5 und 6 beschrieben werden.

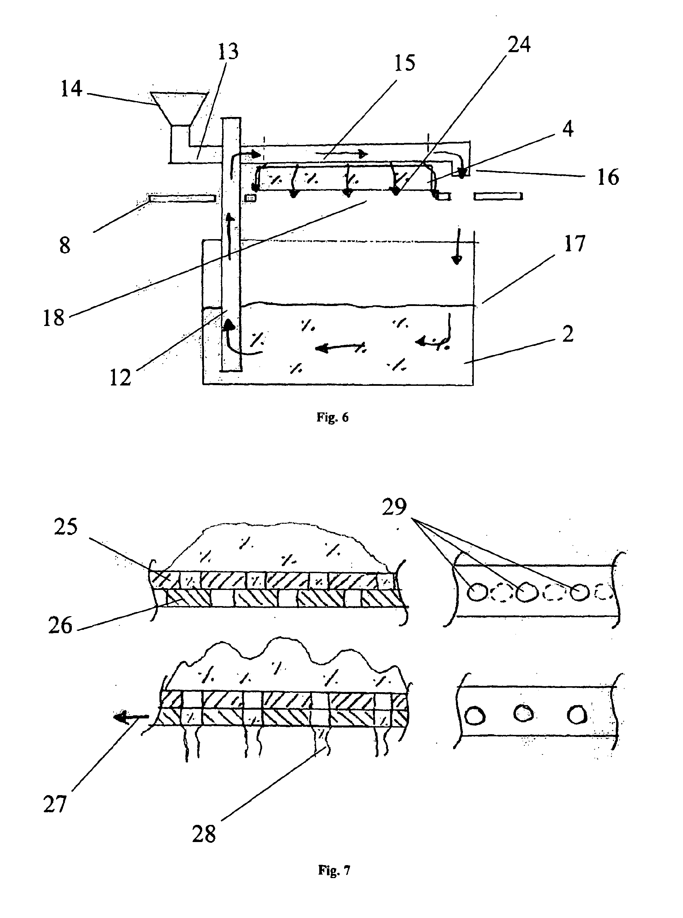

Beispielsweise kann eine Abwurfeinrichtung 15 gemäß einem aus dem Stand der Technik bekannten Verfahren bei gefülltem Transportsystem geöffnet werden und dadurch das vorhandene Pulver abgeschüttet werden. Die Fördereinrichtung ist dabei nicht aktiv. Bei dieser Methode wird in den Beschichter eine definierte Pulvermenge nachgefüllt. Diese ist in Figur 7 mit dem Bezugszeichen 20 dargestellt. Niveauunterschiede innerhalb des Beschichters, die beim Bauvorgang entstehen, können bei dieser Betriebsart nur bedingt ausgeglichen werden. Eine derartige Befüllung wird Stoßbefüllung genannt.

Gemäß einer bevorzugten Ausführung der vorliegenden Erfindung kann der Beschichter befüllt werden, indem die Abwurfeinrichtung 15 geöffnet und das Fördersystem 12, 13 aktiviert wird. Hierbei wird, wie in Figur 5 dargestellt, der Beschichter 4 in Transportrichtung der Transportvorrichtung mit Partikelmaterial 2 befüllt. Überschüssiges Pulver fällt bei zu langer Befülldauer am Beschichter 4 vorbei und wieder zurück in den Vorratsbehälter 6. Dies ist in Figur 6 mit dem Bezugszeichen 24 dargestellt. Ferner wäre es auch möglich, dass das überschüssige Pulver über die Bypassöffnung 16 dem Pulverkreislauf wieder zugeführt wird. Dies ist durch das Bezugszeichen 22 in Figur 5 dargestellt. Eine derartige Befüllung wird Niveaubefüllung genannt.

Ein Vorteil einer solchen Niveaubefüllung liegt darin, dass in Verbindung mit dem Kreislaufsystem die Befüllung ohne einen Sensor erfolgen kann. Da im Falle eines vollständig befüllten Beschichters prinzipiell ohne Nachteile beliebig lange nachgefördert werden kann, müssen keine besonderen Maßnahmen zum Schutz aller beteiligten Aggregate getroffen werden. Eine Sicherstellung des Füllstandes kann über eine einfache Vorwahl der Befülldauer erfolgen.

Ein weiterer Vorteil liegt in der über der Länge des Beschichters gleichmäßigen Befüllung.

Vielfach kann es bei Bauprozess dazu kommen, dass sich der Befüllzustand durch ungleichmäßigen Pulverausfluss aus dem Beschichter über die Länge verändert. Durch die Niveaubefüllung kann bei jedem Nachfüllen eine gleichmäßige Nachfüllung garantiert werden.

Gemäß einer in Figur 7 gezeigten bevorzugten Ausführungsform der Erfindung ist die Abwurfeinrichtung als Blendensystem ausgeführt. Bei einer derartigen Ausgestaltung werden zwei dünne Platten 25, 26 mit Bohrungen 29 oder Schlitzen im Abwurfsystem verwendet. Das Bohrbild der einen Platte entspricht dem der Zweiten ist aber zueinander verschoben. Werden die Platte gegeneinander bewegt 27 so dass sich die Bohrbilder decken, kann Pulver austreten 28. Es fließt durch die Schwerkraft in den Beschichter.

Die Ausführung eines solchen Systems kann beispielsweise als rechteckiges Rohr erfolgen, wobei die Unterseite ein Bohrmuster aufweist. Eine zusätzliche verschiebbare Platte mit einem Bohrmuster vervollständigt das System.

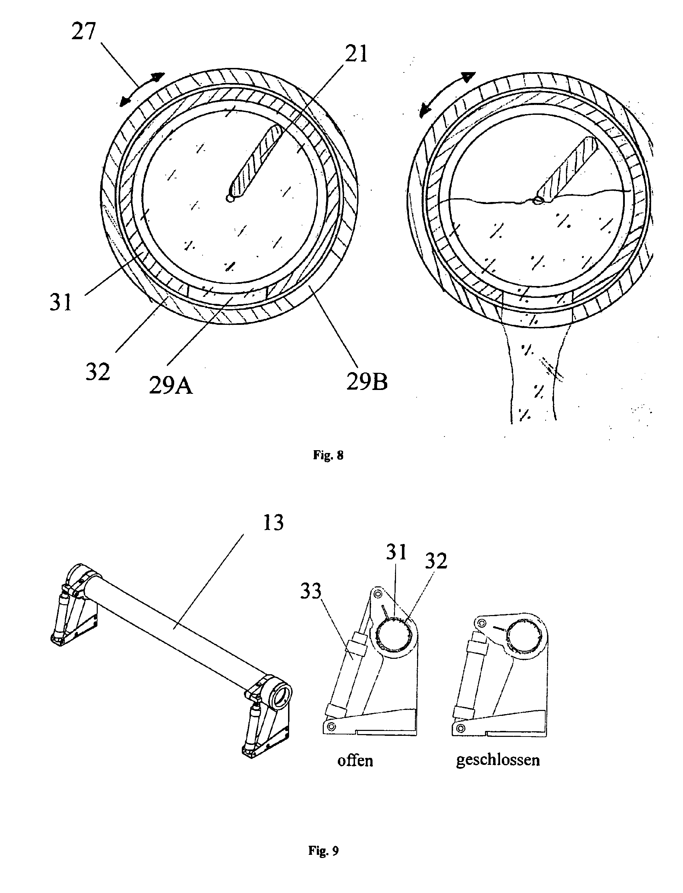

Besonders bevorzugt wird eine Ausführung des Abwurfsystems, bei der die beschriebenen Bohrbilder auf zwei ineinander laufenden Rohren 31, 32 realisiert sind. Eine derartige Ausgestaltung kann Figur 8 entnommen werden. Die Öffnung für den Pulverausfluss wird bei diesem System durch das Verdrehen der Rohre gegeneinander erreicht. Das innere Rohr 31 weist eine Bohrungsreihe 29A an der untersten Stelle auf. Wird die Bohrungsreihe 29B des äußeren Rohres 32 ebenfalls in diese Position gebracht, ist das System offen.

Weiterhin besonders bevorzugt wird ein Rohr-Blendensystem mit einer Förderschnecke 21 im Inneren. Mit einem solchen System kann die oben beschriebenen Niveaubefüllung besonders günstig realisiert werden.

Die oben beschriebenen Systeme können auf unterschiedliche Weise angetrieben werden. Gemäß einer bevorzugten Ausführungsform eignen sich pneumatische elektromagnetische und hydraulische Aktoren 33, siehe Figur 9.

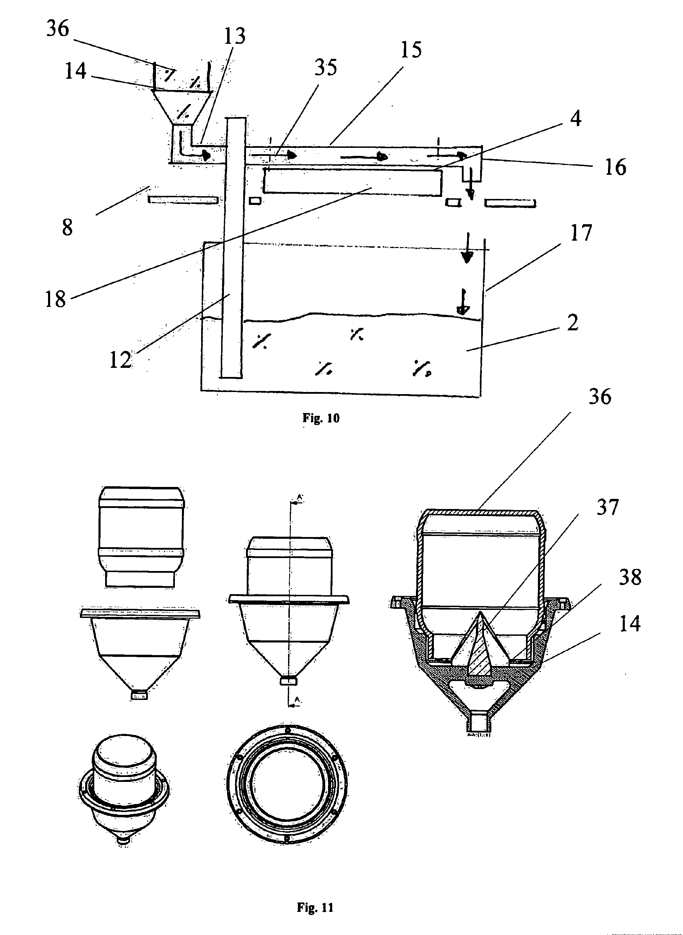

Zusätzlich kann im Pulverkreislauf ein Anschluss für Frischpulver vorgesehen werden. Dies in Figur 10 dargestellt. Ein solcher Frischpulveranschluss 14 wird in günstiger Weise mit einem der ohnehin notwendigen Fördersysteme 12, 13 verbunden.

Der Vorteil gegenüber dem einfachen Nachschütten in den Vorratsbehälter 6 liegt in der konstruktiv möglichen geringeren Staubbelastung für den Anwender.

Besonders bevorzugt wird ein System, bei dem verschlossene Pulverfässer. 36 auf einen Anschlusszapfen mit Einfülltrichter 14 aufgesetzt werden und das System mit Frischpulver versorgen.

Die Fässer können, wie in Figur 11 beispielhaft dargestellt, mit einer Membran 38 versehen werden, die erst beim Aufsetzen auf den Fülltrichter geöffnet wird 37. Als Membranstoffe eignen sich Kunststoff, Metall oder Papier.

Das erfindungsgemäße Verfahren verwendet also zur Befüllung einen Pulverkreislauf, der es ermöglicht, die gestellten Anforderungen zu erfüllen. Durch die kreislaufartige Ausbildung der Pulverförderung kann Pulververlust vermieden werden. Eine Rückführung von Überschusspulver ermöglicht es den Beschichterwagen in hoher Geschwindigkeit auf ein gleichmäßiges Niveau zu füllen. Am Kreislauf kann eine Nachfülleinrichtung eingesetzt werden, die eine Staubarme Nachfüllung ermöglicht. Dies kommt zum Einen der Sicherheit und dem Komfort des Benutzers und zum Anderen den Explosionsschutzanforderungen zu Gute.

## Patentansprüche

1. Verfahren zum Fördern von Partikelmaterial beim schichtweisen Aufbau von Modellen, wobei Pulver (2) aus einem Vorrat in eine Beschichtereinheit (4) und **dadurch gekennzeichnet, dass** absichtlich überschüssiges der Beschichtereinheit (4) zugeführtes Pulver (2) wieder zurück in den Vorrat (17) gefördert wird und diese Förderung in einem geschlossenen Förderkreislauf erfolgt.

2. Verfahren nach Anspruch 1, wobei die Pulverförderung über Schnecken (21) erfolgt.

3. Verfahren nach Anspruch 1 oder 2, wobei die Pulverförderung über Unterdruck erfolgt.

4. Verfahren nach einem der vorhergehenden Ansprüche, wobei die Pulverförderung des Förderkreislaufs über ein einzelnes Fördersystem erfolgt.

5. Verfahren nach einem der vorhergehenden Ansprüche, wobei die Pulverförderung des Förderkreislaufs über mehrere Fördersysteme (12, 13) erfolgt.

6. Verfahren nach einem der vorhergehenden Ansprüche, wobei die Pulverförderung des Förderkreislaufs über Förderbänder und/oder Förderkörbe erfolgt.

7. Verfahren nach einem der vorhergehenden Ansprüche, wobei die Pulverförderung aus dem Vorrat (17) zum Beschichtersystem (4) über ein Abwurfsystem (15) erfolgt.

8. Verfahren nach einem der vorhergehenden Ansprüche, wobei der Förderkreislauf überschüssiges Pulvermaterial (2) nach dem Beschichtungsprozess in den Vorrat (17) zurückfördert.

9. Vorrichtung zum Fördern von Partikelmaterial beim schichtweisen Aufbau von Modellen, aufweisend einen Vorrat (17), eine Beschichtereinheit (4) und ein Pulverfördersystem, **dadurch gekennzeichnet, dass** zumindest der Vorrat (17) und die Beschichtereinheit (4) in einem geschlossenen Förderkreislauf für absichtlich überschüssiges einer Beschichtereinheit zugeführtes Partikelmaterial (2) enthalten sind.

10. Vorrichtung nach Anspruch 9, wobei ferner ein Abwurfsystem (15) vorgesehen ist.

11. Vorrichtung nach Anspruch 9 oder 10, wobei der Vorrat (17) zumindest bei einem Befüllvorgang, in vertikaler Richtung, also in Richtung senkrecht zur Beschichtungsrichtung gesehen, unterhalb der Beschichteinheit (4) angeordnet ist.

12. Vorrichtung nach einem der Ansprüche 9 bis 11, wobei das Pulverfördersystem zumindest ein Förderband aufweist.

13. Vorrichtung nach einem der Ansprüche 9 bis 12, wobei das Pulverfördersystem Förderschnecken (21) aufweist.

14. Vorrichtung nach einem der Ansprüche 9 bis 13, wobei das Pulverfördersystem einen Sauger zur Unterdruckförderung aufweist.

15. Vorrichtung nach einem der Ansprüche 9 bis 14, wobei das Abwurfsystem zwei Blenden (25, 26) mit Schlitzen aufweist.

## Claims

1. A method for conveying particulate material during the manufacture of patterns in layers, wherein powder (2) is conveyed out of a reservoir into a coating unit (4) and which is **characterised in that** intentionally excessive powder (2) fed to the coating unit (4) is again conveyed back into the reservoir (17) and this conveying takes place in a closed conveying circuit.

2. The method according to claim 1, wherein the powder conveying takes place via screw conveyors (21),

3. The method according to claim 1 or 2, wherein the powder conveying takes place via low pressure.

4. The method according to any one of the preceding claims, wherein the powder conveying of the conveying circuit takes place via an individual conveying system.

5. The method according to any one of the preceding claims, wherein the powder conveying of the conveying circuit takes place via a plurality of conveying systems (12, 13).

6. The method according to any one of the preceding claims, wherein the powder conveying of the conveying circuit takes place via conveyor belts and/or conveyor cages.

7. The method according to any one of the preceding claims, wherein the powder conveying out of the reservoir (17) into the coating system (4) takes place via an ejection system (15).

8. The method according to any one of the preceding claims, wherein the conveying circuit conveys excess powder material (2) back into the reservoir (17) after the coating process.

9. A device for conveying particulate material during the manufacture of patterns in layers, comprising a reservoir (17), a coating unit (4) and a powder conveying system, **characterised in that** at least the reservoir (17) and the coating unit (4) are contained in a closed conveying circuit for intentionally excessive particulate material (2) conveyed to a coating unit.

10. The device according to claim 9, wherein provision is furthermore made for an ejection system (15).

11. The device according to claim 9 or 10, wherein the reservoir (17) is arranged below the coating unit (4) in vertical direction, thus viewed in the direction perpendicular to the coating direction, at least during a filling process.

12. The device according to any one of claims 9 to 11, wherein the powder conveying system comprises at least one conveyor belt.

13. The device according to any one of claims 9 to 12, wherein the powder conveying system comprises screw conveyors (21).

14. The device according to any one of claims 9 to 13, wherein the powder conveying system comprises a suction device for low pressure conveying.

15. The device according to any one of claims 9 to 14, wherein the ejection system comprises two covers (25, 26) comprising slits.

## Revendications

1. Procédé d'acheminement d'un matériau en particules lors de la constitution en couches de modèles, dans lequel de la poudre (2) est acheminée d'un réservoir à une unité de revêtement (4) et **caractérisé en ce que** de la poudre (2) intentionellement en excès, acheminée dans l'unité de revêtement (4), est réacheminée dans le réservoir (17), ce dernier acheminement s'effectuant dans un circuit d'acheminement fermé.

2. Procède selon la revendication 1, dans lequel l'acheminement de la poudre s'effectue par des vis sans fin (21).

3. Procédé selon les revendications 1 ou 2, dans lequel l'acheminement de la poudre s'effectue par sous-pression.

4. Procédé selon l'une quelconque des revendications précédentes, dans lequel l'acheminement de la poudre dans le circuit d'acheminement s'effectue au moyen d'un seul système d'acheminement.

5. procédé selon l'une quelconque des revendications précédentes, dans lequel l'acheminement de la poudre dans le circuit d'acheminement s'effectue au moyen de plusieurs systèmes d'acheminement (12, 13).

6. Procédé selon l'une quelconque des revendications précédentes, dans lequel l'acheminement de la poudre dans le circuit d'acheminement s'effectue au moyen de bandes transporteuses et/ou de cages de transport.

7. Procédé selon l'une quelconque des revendications précédentes, dans lequel l'acheminement de la poudre du réservoir (17) au système de revêtement (4) s'effectue au moyen d'un système d'éjection (15).

8. Procédé selon l'une quelconque des revendications précédentes, dans lequel le circuit d'acheminement réachemine du matériau poudreux (2) en excès dans le réservoir (17) après le procédé de revêtement,

9. Dispositif d'acheminement de matériau en particules lors de la constitution en couche de modèles, présentant un réservoir (17), une unité de revêtement (4) et un système d'acheminement de poudre, **caractérisé en ce qu'**au moins le réservoir (17) et l'unité de revêtement (4) sont disposés dans un circuit d'acheminement fermé pour du matériau en particules (2) intentionellement en excès qui est acheminé à une unité de revêtement.

10. Dispositif selon la revendication 9, dans lequel on prévoit en plus un système d'éjection (15).

11. Dispositif selon les revendications 9 ou 10, dans lequel le réservoir (17) est disposé au-dessous de l'unité de revêtement (4) en direction verticale, dans une vue perpendiculaire à la direction de revêtement, au moins pendant un procédé de chargement.

12. Dispositif selon l'une quelconque des revendications 9 à 11, dans lequel le système d'acheminement de poudre comprend au moins une bande transporteuse.

13. Dispositif selon l'une quelconque des revendications 9 à 12, dans lequel le système d'acheminement de poudre comprend des vis sans fin (21).

14. Dispositif selon l'une quelconque des revendications 9 à 13, dans lequel le système d'acheminement de poudre comprend un aspirateur pour l'acheminement par sous-pression.

15. Dispositif selon l'une quelconque des revendications 9 à 14, dans lequel le système d'éjection comprend deux cadres (25, 26) présentant des fentes.
